# EUROPÄISCHE PATENTSCHRIFT

(11) **EP 3 448 632 B1**
(45) Veröffentlichungstag und Bekanntmachung des Hinweises auf die Patenterteilung: **01.09.2021**
(21) Anmeldenummer: 17721077.0
(22) Anmeldetag: 21.04.2017
(51) Int. Cl.: B25J 9/16, B25J 19/06, G05B 19/406

(54) **SYSTEM UND VERFAHREN ZUM STEUERN EINES ROBOTERS**
SYSTEM AND METHOD FOR CONTROLLING A ROBOT
SYSTÈME ET PROCÉDÉ POUR COMMANDER UN ROBOT

(30) Priorität: 24.04.2016 DE 102016005026
(43) Veröffentlichungstag der Anmeldung: 06.03.2019
(73) Patentinhaber: Franka Emika GmbH, 80797 München (DE)
(72) Erfinder: HADDADIN, Sami, 30173 Hannover (DE); PIETSCH, Björn, 81549 München (DE)
(74) Vertreter: Rösler Rasch van der Heide & Partner
(86) Internationale Anmeldenummer: PCT/EP2017/059562
(87) Internationale Veröffentlichungsnummer: WO 2017/186599

(56) Entgegenhaltungen:
- US-A1- 2014 362 480
- US-B1- 6 778 867

## Beschreibung

Die Erfindung betrifft ein System und ein Verfahren zum Steuern eines Roboters. Die Erfindung betrifft weiterhin einen Roboter mit einem eben solchen System. Das vorgeschlagene System und des Verfahren dienen insbesondere einer Erhöhung der funktionalen Sicherheit beim Betrieb des Roboters.

Roboter mit beweglichen Teilen (einem oder mehreren Robotermanipulatoren, etc.) werden heute zunehmend in Bereichen eingesetzt, in denen die Roboter mit Menschen interagierend Aufgaben erledigen. Hierbei ist es erforderlich, die Roboter derart auszuführen, dass sie über eine hohe funktionale Sicherheit und eine hohe Sicherheitsintegrität verfügen.

Aus der Druckschrift US 6,778,867 B1 ist ein Überwachungs- und Steuergerät zur Überwachung einer zumindest eine portable und/oder mobile und/oder immobile Einrichtung umfassenden technischen Anlage bekannt, welche erhöhte Sicherheitsanforderungen umsetzt. Das darin offenbarte Überwachungs- und Steuergerät umfasst zumindest eine vorzugsweise zentrale und/oder dezentrale Steuereinheit sowie mit dieser verbundene Aktoren zur Ausführung von gefahrbringenden Aktionen, wobei das Überwachungs- und Steuergerät mit Sensoren und/ oder Aktoren verbunden ist und deren Zustände auswertet, verarbeitet und steuert. Die Steuereinheit ist über zumindest eine Datenverbindung mit dem zumindest einen Aktor und/ oder Sensor und dem Überwachungs- und Steuergerät verbunden ist, wobei das Überwachungs- und Steuergerät in Abhängigkeit der Zustände der Sensoren und/oder Aktoren zumindest ein Freigabesignal an die Steuereinheit zur Ermöglichung zumindest einer Aktion in der technischen Anlage überträgt, das Freigabesignal eine Aktion auslöst, die durch das Steuer- und Überwachungsgerät durch Vergleich mit gespeicherten und/oder vorgegebenen Ausführungs- und/oder Funktions- und/oder Plausibilitätsvorgaben bzw. Bewegungsabläufen überwacht wird, und im Fehlerfall zumindest ein weiteres Signal erzeugt wird, durch das die Anlage in einen sicheren Zustand überführt wird.

Die Aufgabe der Erfindung ist es, ein System und ein Verfahren zum Steuern eines Roboters anzugeben, die eine verbesserte funktionale Sicherheit und Sicherheitsintegrität des Roboters beim Betrieb ermöglichen.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Ein erster Aspekt der Erfindung betrifft ein System zur Steuerung eines Roboters. Der Roboter umfasst eine Schnittstelle, die von einem oder mehreren Sensoren erfasste Daten DAT(t) bereitstellt, die einen aktuellen Zustand ZUS(t) des Roboters angeben, einen mit der Schnittstelle verbundenen ersten Prozessor, der dazu eingerichtet ist, mit einem ersten Algorithmus auf Basis der Daten DAT(t) und eines vorgegebenen Zustandsraums ***Z***, der ausschließlich erlaubte Zustände des Roboters angibt, zu prüfen, ob gilt: ZUS(t) ∈ ***Z***, wobei im Fall: ZUS(t) ∉ ***Z*** ein erstes Stoppsignal erzeugt wird, eine über eine Datenverbindung mit dem ersten Prozessor verbundene Einheit zur Erzeugung eines zweiten Stoppsignals, wobei das zweite Stoppsignal dann erzeugt wird, wenn von der Einheit das erste Stoppsignal empfangen wird oder wenn die Datenverbindung unterbrochen ist, einen mit der Schnittstelle und dem ersten Prozessor oder nur mit dem ersten Prozessor verbundenen zweiten Prozessor, der dazu eingerichtet ist, mit einem zweiten Algorithmus auf Basis der Daten DAT(t) und des vorgegebenen Zustandsraums ***Z*** zu prüfen, ob gilt: ZUS(t) ∈ ***Z***, wobei im Fall ZUS(t) ∉ **Z** die Datenverbindung zwischen dem ersten Prozessor und der Einheit unterbrochen wird, und eine mit der Einheit verbundene Steuereinheit zur Steuerung des Roboters, die den Roboter dann, wenn das zweite Stoppsignal vorliegt, den Roboter in einen vorgegebenen sicheren Zustand steuert.

Der Begriff "aktueller Zustand ZUS(t) des Roboters" wird vorliegend weit gefasst verstanden. Er umfasst insbesondere einen statischen und/oder dynamischen mechanischen und/oder elektrischen aktuellen Zustand ZUS(t) des Roboters. Weiterhin umfasst der Begriff Zustände, bei denen der Roboter mechanisch oder elektrisch mit seiner Umgebung wechselwirkt. Entsprechende Sensoren zur Erfassung der den aktuellen Zustandes ZUS(t) definierenden Parameter und zur Erzeugung der entsprechenden Daten DAT(t) sind im Stand der Technik bekannt. Der aktuelle Zustand ZUS(t) ist insbesondere als mehrdimensionaler Vektor aufzufassen, der einzelne Zustandsparameter aufweist. Die Daten DAT(t) geben die Werte der Zustandsparameter an, die den Zustand ZUS(t) definieren. Sowohl der aktuelle Zustand ZUS(t) wie auch die zugeordneten Daten DAT(t) sind zeitabhängig, wobei t die Zeit angibt.

Die den aktuellen Zustand ZUS(t) definierenden Daten DAT(t) werden an den ersten Prozessor über eine Schnittstelle bereitgestellt. Dem ersten Prozessor wird darüber hinaus der Zustandsraum **Z oder** die Begrenzung des Zustandsraums ***Z*** bereitgestellt, wobei der Zustandsraum ***Z*** ausschließlich erlaubte Zustände des Roboters angibt. Der Zustandsraum ***Z*** kann dem ersten Prozessor auch als eine parametrische Beschreibung der erlaubten Zustände bereitgestellt werden. Von dem ersten Prozessor wird ein erster Algorithmus ausgeführt, der auf Basis der Daten DAT(t) und des vorgegebenen Zustandsraums ***Z*** prüft, ob der aktuelle Zustand ZUS(t) ein Element des Zustandsraums ***Z*** ist. Wird bei dieser Prüfung festgestellt, dass der aktuelle Zustand ZUS(t) kein Element des Zustandsraums ***Z*** ist, wird ein erstes Stoppsignal erzeugt. Das erste Stoppsignal ist bevorzugt ein elektrisches oder ein optisches Signal.

Der erste Prozessor ist weiterhin über eine Datenverbindung mit der Einheit zur Erzeugung eines zweiten Stoppsignals verbunden. Diese Datenverbindung ist vorteilhaft zur Signalleitung elektrischer oder optischer Signale ausgeführt. Diese Datenverbindung ist vorteilhaft als Ethernet Verbindung ausgeführt Diese Datenverbindung ist insbesondere dazu eingerichtet und ausgeführt, das vom ersten Prozessor erzeugte erste Stoppsignal an die Einheit zu übermitteln. Die Einheit ist weiterhin erfindungsgemäß derart ausgeführt und eingerichtet, dass, sofern von ihr ein von dem ersten Prozessor ausgesandtes erstes Stoppsignal empfangen wird oder sofern von der Einheit festgestellt wird, dass die Datenverbindung zum ersten Prozessor unterbrochen ist, von der Einheit ein zweites Stoppsignal erzeugt wird. Hierzu ist die Einheit vorteilhaft dazu eingerichtet, das Vorhandensein einer unterbrechungsfreien Datenverbindung zwischen dem ersten Prozessor und der Einheit bspw. auf Basis einer Datenübertragung mittels eines Sicherheits-Datenprotokolls zu überwachen.

Das zweite Stoppsignal wird erfindungsgemäß an die Steuereinheit des Roboters übermittelt, und veranlasst die Steuereinheit, den Roboter in einen vorgegebenen sicheren Zustand zu steuern. Die Steuereinheit steuert vorliegend insbesondere die Aktoren von aktorisch angetriebenen Elementen des Roboters. Vorteilhaft ist die Steuereinheit die zentrale Steuereinheit des gesamten Roboters, die somit alle steuerbaren Funktionen und Zustände des Roboters steuert bzw. regelt. Die Steuereinheit kann weiterhin örtlich verteilte Steuereinheiten umfassen, die beispielsweise jeweils die lokal den Aktoren des Roboters zugeordneten Steuerelektronikeinheiten umfasst.

Der Begriff "sicherer Zustand" wird vorliegend weit gefasst verstanden. Er umfasst beispielsweise ein Abbremsen aller beweglichen Teile des Roboters in eine vorgegebene Pose oder ein Abbremsen aller beweglichen Teile des Roboters in den Stand ohne Vorgabe einer Pose, oder eine Verringerung der Bewegungsgeschwindigkeit der beweglichen Teile des Roboters auf eine vorgegebene Geschwindigkeit, etc. Der "sichere Zustand" kann darüber hinaus einen sicheren elektrischen und/oder datentechnischen Zustand umfassen. So kann beispielsweise durch die Steuereinheit nach Empfang des zweiten Stoppsignals eine Datensicherung veranlasst werden und/oder bestimmte Untereinheiten des Robotersystems stromlos geschalten werden etc. In einer Variante wird das zweite Stoppsignal an Aktoreinheiten des Roboters übermittelt. Der sichere Zustand wird vorteilhaft je nach Aufgabenstellung des Roboters entsprechend vorgegeben und erfüllt vorteilhaft die Bedingung, dass in dem sicheren Zustand vom Roboter keinerlei Gefährdung seiner Umwelt oder des Roboter selbst ausgeht.

Erfindungsgemäß ist der zweite Prozessor mit der Schnittstelle und dem ersten Prozessor oder nur mit dem ersten Prozessor verbunden, sodass der zweite Prozessor ebenfalls die den aktuellen Zustand ZUS(t) definierenden Daten DAT(t) entweder von der Schnittstelle oder vom ersten Prozessor erhält. Der zweite Prozessor führt einen zweiten Algorithmus aus, mit dem auf Basis eines vorgegebenen Zustandsraums ***Z*'** geprüft wird, ob der aktuelle Zustand ZUS(t) ein Element des Zustandsraums ***Z*'** ist. Wird dabei festgestellt, dass der aktuelle Zustand ZUS(t) kein Element des Zustandsraums ***Z***'ist, veranlasst der zweite Prozessor eine Unterbrechung der Datenverbindung zwischen dem ersten Prozessor und der Einheit. Hierzu steuert der zweite Prozessor vorteilhaft ein Unterbrechungselement, beispielsweise einen Schalter an, der die Datenverbindung vorteilhaft physikalisch unterbricht. Alternativ zu einer physikalischen Unterbrechung der Datenverbindung kann eine Unterbrechung der Datenverbindung auch beispielsweise durch Erzeugen eines Kurzschluss von allen elektrischen Leitungen der Datenverbindung gegen ein vorgegebenes festes Potenzial erzeugt werden.

Die Zustandsräume ***Z*** und ***Z'*** werden vorteilhaft derart gewählt, dass sichergestellt ist, dass die Prüfung eines Zustands ZUS(t) durch den ersten Prozessor und den zweiten Prozessor zu einem konsistenten Ergebnis führt. Die Zustandsräume ***Z*** können auch ***Z*'** identisch sein.

Eine vorteilhafte Weiterbildung des vorgeschlagenen Systems ist dadurch gekennzeichnet, dass der zweite Prozessor zur Überwachung der Ausführung des ersten Algorithmus auf dem ersten Prozessor eingerichtet ist, wobei der zweite Prozessor bei Feststellung einer fehlerhaften Ausführung des ersten Algorithmus die Datenverbindung zwischen dem ersten Prozessor und der Einheit vorteilhaft ebenfalls unterbricht.

Die Überwachung des ersten Prozessors durch den zweiten Prozessor schließt vorteilhaft erstens das Überwachen ein, ob der erste Prozessor den ersten Algorithmus überhaupt ausführt oder nicht, sowie zweitens das Überwachen ein, ob der erste Prozessor den ersten Algorithmus fehlerfrei ausführt. Vorteilhaft wird also bei einer Nichtausführung des ersten Algorithmus (beispielsweise weil der Algorithmus auf einen Fehler aufgelaufen ist oder der Prozessor einen Schaden aufweist) durch den ersten Prozessor oder bei einer fehlerhaften Ausführung des ersten Algorithmus durch den ersten Prozessor die Datenverbindung zwischen dem ersten Prozessor und der Einheit unterbrochen. Dieser Fall führt, wie vorstehend ausgeführt, zur Erzeugung des zweiten Stoppsignals und in Folge zu einer Einnahme des sicheren Zustands durch den Roboter.

Eine vorteilhafte Weiterbildung des vorgeschlagenen Systems zeichnet sich dadurch aus, dass der erste Prozessor zur Überwachung der Ausführung des zweiten Algorithmus auf dem zweiten Prozessor eingerichtet ist, wobei der erste Prozessor bei Feststellung einer fehlerhaften Ausführung des zweiten Algorithmus (was vorteilhaft eine Nichtausführung einschließt) ein erstes Stoppsignal und/oder ein Warnsignal erzeugt. Sofern das erste Stoppsignal erzeugt wird, wird dieses an die Einheit übermittelt und erzeugt dort das zweite Stoppsignal, in dessen Folge der Roboter den sicheren Zustand einnimmt. Das Warnsignal wird vorteilhaft an eine Ausgabeeinheit übermittelt, die zur Ausgabe des Warnsignals als ein optisch und/oder akustisch wahrnehmbares Signal eingerichtet und ausgeführt ist. Sollte der zweite Prozessor in dieser Weiterbildung aufgrund eines Fehlers bei der Ausführung des zweiten Algorithmus die Datenverbindung zwischen dem ersten Prozessor und der Einheit unterbrechen, dann ist die Steuerung des Roboters funktional sicher. Liegt bei der Ausführung des zweiten Algorithmus durch den zweiten Prozessor ein Fehler vor, der aber nicht zu einer Unterbrechung der Datenverbindung zwischen dem ersten Prozessor und der Einheit führt, wird dies in dieser Weiterbildung vom ersten Prozessor erkannt, sodass der erste Prozessor ein erstes Stoppsignal erzeugt und über die Datenverbindung an die Einheit übermittelt wird, sodass von dieser ein zweites Stoppsignal erzeugt wird, das veranlasst den Roboter in einen sicheren Zustand zu überführen.
Eine vorteilhafte Weiterbildung des vorgeschlagenen Systems zeichnet sich dadurch aus, dass zur Unterbrechung der Datenverbindung zwischen dem ersten Prozessor und der Einheit ein vom zweiten Prozessor gesteuerter Schalter vorhanden ist. Vorteilhaft ist der Schalter als elektrischer oder optischer Schalter ausgeführt. Der Schalter kann in einem Schaltzustand, der der Unterbrechung der Datenverbindung entspricht, auch einen Kurzschluss der elektrischen Datenleitungen erzeugen. Vorteilhaft wird die Datenverbindung durch den Schalter physikalisch unterbrochen. Vorteilhaft ist die Datenverbindung eine symmetrisch verschlüsselte Datenverbindung. Mit diesen Datenverbindungen wird eine sichere Datenübermittlung gewährleistet.

Vorteilhaft ist der zweite Prozessor auf einer Einheit, wie beispielsweise eine Einsteckkarte oder einem Erweiterungsmodul angeordnet, die standardmäßig als Erweiterung des ersten Prozessors vorgesehen ist.

Eine besonders vorteilhafte Weiterbildung des vorgeschlagenen Systems zeichnet sich dadurch aus, dass ein zweiter Chipsatz des zweiten Prozessors über eine PCI-, PCI-X oder PCle-Verbindung oder ähnlichen technischen Lösungen mit einem ersten Chipsatz des ersten Prozessors verbunden ist. Der Begriff "PCI" (engl. "Peripherical Component Interconnect") steht vorliegend für einen Busstandard zur Verbindung von Peripheriegeräten mit einem Chipsatz eines Prozessors. Vorteilhaft ist der zweite Prozessor auf einer PCI-Karte angeordnet, die auf die Hauptplatine des ersten Prozessors eingesteckt wird. Vorteilhaft sind der erste und der zweite Chipsatz auf einem integrierten Prozessorchip angeordnet.

Weiterhin vorteilhaft sind der erste Prozessor und der zweite Prozessor unterschiedliche Prozessortypen.

Weiterhin vorteilhaft sind der erste Algorithmus und der zweite Algorithmus unterschiedliche Algorithmen oder zumindest unterschiedliche Programmierung in ein und desselben Algorithmus. Durch unterschiedliche Prozessortypen bzw. unterschiedliche ausgeführte Algorithmen kann die funktionale Sicherheit des Systems zur Steuerung eines Roboters erheblich gesteigert werden. Sind der erste Algorithmus und der zweite Algorithmus unterschiedlich, so bedingt das im allgemeinen Fall unterschiedliche Zustandsräume ***Z*** und ***Z*'.** Diese werden wie vorstehend bereits beschrieben vorteilhaft derart gewählt, dass sichergestellt ist, dass die Prüfung eines Zustands ZUS(t) durch den ersten Prozessor und den zweiten Prozessor zu einem konsistenten Ergebnis führt.

Insbesondere ist es mit dem vorgeschlagenen System möglich, weiterhin steigende Anforderungen an Robotersteuerungen hinsichtlich der funktionalen Sicherheit mit einem einfachen und kostengünstigen System zu realisieren.

Ist der zweite Prozessor als PCI-Karte ausgeführt, so ergeben sich insbesondere folgende Vorteile:
- ein geringerer Einbauaufwand, da keine Kabel erforderlich sind und eine integrierte Energieversorgung genutzt werden kann,
- es besteht keine Verwechslungsgefahr mit anderen, beispielsweise Ethernet-Verbindungen, da keine zusätzlichen Verbindungen erforderlich sind,
- es wird ein hoher Datendurchsatz ermöglicht, der wiederum den Austausch komplexer Daten ohne nennenswerte zeitliche Verzögerung erlaubt, sodass komplexe Sicherheitsprüfungen möglich sind, und
- eine Nutzung beider Prozessoren (erster und zweiter Prozessor) zur Erhöhung der Rechenleistung ist aufgrund des hohen Datendurchsatz möglich,

Vorteilhaft ist die Verbindung zwischen dem ersten Prozessor und der Einheit als Ethernet-Verbindung ausgeführt. Vorteilhaft ist ein Ethernet Controller für einen Feldbus zur Steuerung des Roboters auf dem zweiten Prozessor angeordnet, aber logisch dem ersten Prozessor zugeordnet. Somit ist ein Standardcontroller vom ersten Prozessor aus nutzbar, so dass keine Änderungen an der auf dem ersten Prozessor für die Datenverbindung genutzten Software erforderlich sind (transparente Ankopplung). Vorteilhaft ist zur Unterbrechung der Ethernet-Verbindung zwischen dem ersten Prozessor und der Einheit ein vom zweiten Prozessor gesteuerter Analogschalter vorgesehen. Dieser Analogschalter kann die Ethernet-Verbindung physikalisch unterbrechen. Damit ist keine Umgehung des Abschaltens durch den Ethernet-Controller möglich. Dadurch, dass der Analogschalter durch den zweiten Prozessor kontrolliert wird, ist ein echter unabhängiger Hardwarepfad für einen zweiten Kanal im System vorhanden.

Damit ergeben sich geringere Latenzzeiten gegenüber Lösungen mit verteilter Berechnung von sicheren Datenpaketen zur Ansteuerung des Roboters. Das sichere Signal wird durch das Abschalten bzw. Unterbrechen der Kommunikation zwischen dem ersten Prozessor und der Einheit erzeugt. Der zweite Prozessor muss vorteilhaft keine Ausgangsdaten zur Steuereinheit innerhalb eines Buszyklus beisteuern. Das vorgeschlagene System ermöglicht insbesondere eine einfache Behandlung der sicheren Abschaltung des Roboters. Der Roboter muss den Fall einer unterbrochenen Kommunikation ohnehin behandeln können, weil er durch Fehler im Verbindungskabel entstehen kann. Der Roboter nimmt in diesem Fall selbständig den sicheren Zustand ein.

Das vorgeschlagene System ermöglicht insgesamt eine Steuerung eines Roboters mit einer erhöhten funktionalen Sicherheit.

Ein weiterer Aspekt der vorliegenden Erfindung betrifft einen Roboter mit einem System wie vorstehend beschrieben.

Ein weiterer Aspekt der vorliegenden Erfindung betrifft ein Verfahren zum (sicheren) Steuern eines Roboters. Das vorgeschlagene Verfahren weist folgende Schritte auf.

In einem Schritt erfolgt durch eine Schnittstelle ein Bereitstellen von Daten DAT(t), die einen von einem oder mehreren Sensoren erfassten aktuellen Zustand ZUS(t) des Roboters angeben. In einem weiteren Schritt erfolgt mittels eines auf einem ersten Prozessor durchgeführten ersten Algorithmus auf Basis der Daten DAT(t) und eines vorgegebenen Zustandsraums ***Z*** oder der Begrenzung des Zustandsraums ***Z*** der ausschließlich erlaubte Zustände des Roboters angibt, ein Prüfen, ob gilt: ZUS(t) ∈ *Z*, wobei im Fall: ZUS(t) ∉ ***Z*** ein erstes Stoppsignal Sig1 erzeugt wird. In einem weiteren Schritt erfolgt durch eine über eine Datenverbindung mit dem ersten Prozessor verbundene Einheit ein Erzeugen eines zweiten Stoppsignals Sig2 dann, wenn von der Einheit das erste Stoppsignal Sig1 empfangen wird oder wenn die Datenverbindung unterbrochen ist. In einem weiteren Schritt erfolgt durch einen mit der Schnittstelle und dem ersten Prozessor oder nur mit dem ersten Prozessor verbundenen zweiten Prozessor mittels eines auf dem zweiten Prozessor durchgeführten zweiten Algorithmus auf Basis der Daten DAT(t) und eines vorgegebenen Zustandsraums ***Z*'** ein Prüfen, ob gilt: ZUS(t) ∈ ***Z*',** wobei im Fall ZUS(t) ∉ ***Z*'** die Datenverbindung zwischen dem ersten Prozessor und der Einheit unterbrochen wird. In einem weiteren Schritt erfolgt durch eine mit der Einheit verbundene Steuereinheit zur Steuerung des Roboters, ein Steuern des Roboters in einen vorgegebenen sicheren Zustand dann, wenn von der Steuereinheit das zweite Stoppsignal Sig2 vorliegt.

Vorteile und vorteilhafte Weiterbildungen des vorgeschlagenen Verfahrens ergeben sich durch eine analoge und sinngemäße Übertragung der zu dem vorgeschlagenen System gemachten Ausführungen.

Die Aufgabe der Erfindung ist weiterhin gelöst durch ein Computersystem mit einer Datenverarbeitungsvorrichtung, wobei die Datenverarbeitungsvorrichtung derart ausgestaltet ist, dass ein Verfahren, wie vorstehend beschrieben, auf der Datenverarbeitungsvorrichtung ausgeführt wird.

Zudem wird die Aufgabe der Erfindung gelöst durch ein digitales Speichermedium mit elektronisch auslesbaren Steuersignalen, wobei die Steuersignale so mit einem programmierbaren Computersystem zusammenwirken können, dass ein Verfahren, wie vorstehend beschrieben, ausgeführt wird.

Ferner wird die Aufgabe der Erfindung gelöst durch ein Computer-Programm-Produkt mit auf einem maschinenlesbaren Träger gespeichertem Programmcode zur Durchführung des Verfahrens, wie vorstehend beschrieben, wenn der Programmcode auf einer Datenverarbeitungsvorrichtung ausgeführt wird.

Schließlich betrifft die Erfindung ein Computer-Programm mit Programmcodes zur Durchführung des Verfahrens, wie vorstehend beschrieben, wenn das Programm auf einer Datenverarbeitungsvorrichtung abläuft. Dazu kann die Datenverarbeitungsvorrichtung als ein beliebiges aus dem Stand der Technik bekanntes Computersystem ausgestaltet sein.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigt:

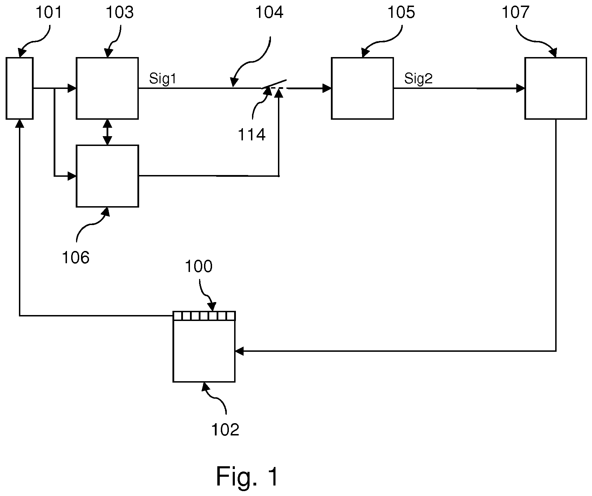

- Fig. 1: eine schematisierte Darstellung einer Variante des vorgeschlagenen Systems.

**Fig. 1** zeigt eine schematisierte Darstellung einer Variante des vorgeschlagenen Systems zur Steuerung eines Roboters 102. Der Roboter 102 weist vorliegend einen mehrgliedrigen aktorisch angetriebenen Robotermanipulator auf. Das System weist weiterhin eine Schnittstelle 101 auf, die von mehreren Sensoren 100 erfasste Daten DAT(t) bereitstellt, die einen aktuellen Zustand ZUS(t) des Robotermanipulators angeben. Der Zustand ZUS(t) gibt im vorliegenden Ausführungsbeispiel bei den einzelnen Gliedern des Robotermanipulators auftretende Kräfte und Drehmomente, extern auf die einzelnen Glieder einwirkende Kraftwinder, sowie Positionen, Orientierungen, Geschwindigkeiten und Beschleunigungen der einzelnen Glieder an.

Die Schnittstelle 101 ist mit einem ersten Prozessor 103 verbunden. Die Daten DAT(t), die den aktuellen Zustand ZUS(t) angeben, werden somit dem ersten Prozessor 103 bereitgestellt. Durch den ersten Prozessor 103 wird ein erster Algorithmus ausgeführt, der auf Basis der bereitgestellten Daten DAT(t) und eines vorgegebenen Zustandsraums ***Z*,** der ausschließlich erlaubte Zustände des Roboters 102 bzw. des Robotermanipulators angibt, prüft, ob der aktuelle Zustand ZUS(t) ein Element (∈) des Zustandsraums ***Z*** ist: ZUS(t) ∈ ***Z*.** Wird dabei festgestellt dass gilt: ZUS(t) ∉ ***Z*,** wird ein erstes elektrisches Stoppsignal Sig1 erzeugt.

Das System umfasst weiterhin eine über eine Datenverbindung 104 mit dem ersten Prozessor 103 verbundene Einheit 105, die zur Erzeugung eines zweiten elektrischen Stoppsignals Sig2 dient, wobei das zweite Stoppsignal Sign2 von der Einheit dann erzeugt wird, wenn von der Einheit 105 das erste Stoppsignal Sig1 empfangen wird oder wenn die Einheit 105 feststellt, dass die Datenverbindung 104 unterbrochen ist.

Die Schnittstelle 101 ist weiterhin mit einem zweiten Prozessor 106 verbunden, der einen anderen Chipsatz bzw. einen Prozessor mit einer anderen Prozessorarchitektur als der erste Prozessor 103 aufweist. Der erste 103 und zweite 106 Prozessor sind damit von unterschiedlicher Bauart. Durch die Schnittstelle 101 werden dem zweiten Prozessor 106 zeitparallel die Daten DAT(t) bereitgestellt. Der zweite Prozessor 106 ist dazu eingerichtet mit einem zweiten Algorithmus auf Basis der Daten DAT(t) und eines vorgegebenen Zustandsraums ***Z*'** zu prüfen, ob gilt: ZUS(t) ∈ ***Z*'**, wobei im Fall ZUS(t) ∉ ***Z*'** die Datenverbindung 104 zwischen dem ersten Prozessor 103 und der Einheit 105 durch Ansteuerung eines analogen Schalters 114 unterbrochen wird. Der erste Algorithmus unterscheidet sich dabei vom zweiten Algorithmus, wobei jedoch beide Algorithmen die vorstehend angeführten Prüfungen ausführen.

Schließlich umfasst das System eine mit der Einheit 105 verbundene Steuereinheit 107 zur Steuerung des Roboters 102, die den Roboter 102 dann, wenn sie das zweite Stoppsignal Sig2 empfängt, in einen vorgegebenen sicheren Zustand steuert.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 100: Sensoren
- 101: Schnittstelle
- 102: Roboter
- 103: erster Prozessor
- 104: Datenverbindung zwischen dem ersten Prozessor und der Einheit
- 105: Einheit
- 106: zweiter Prozessor
- 107: Steuereinheit
- 114: Unterbrecher / Schalter

## Patentansprüche

1. System zur Steuerung eines Roboters (102), umfassend:
- eine Schnittstelle (101), die von einem oder mehreren Sensoren (100) erfasste Daten DAT(t) bereitstellt, wobei die Daten DAT(t) einen aktuellen Zustand ZUS(t) des Roboters (102) angeben,
- einen mit der Schnittstelle (101) verbundenen ersten Prozessor (103), der dazu eingerichtet ist, mit einem ersten Algorithmus auf Basis der Daten DAT(t) und eines vorgegebenen Zustandsraums ***Z*** oder einer Begrenzung des Zustandsraums ***Z*** der ausschließlich erlaubte Zustände des Roboters (102) angibt, zu prüfen, ob gilt: ZUS(t) ∈ ***Z***, wobei im Fall: ZUS(t) ∉ ***Z*** ein erstes Stoppsignal Sig1 erzeugt wird,
- eine über eine Datenverbindung (104) mit dem ersten Prozessor (103) verbundene Einheit (105) zur Erzeugung eines zweiten Stoppsignals Sig2, die das zweite Stoppsignal dann erzeugt, wenn von der Einheit (105) das erste Stoppsignal Sig1 empfangen wird oder wenn die Einheit (105) feststellt, dass die Datenverbindung (104) unterbrochen ist,
- einen mit der Schnittstelle (101) und dem ersten Prozessor (103) oder nur mit dem ersten Prozessor (103) verbundenen zweiten Prozessor (106), der dazu eingerichtet ist, mit einem zweiten Algorithmus auf Basis der Daten DAT(t) und eines vorgegebenen Zustandsraums ***Z*'** oder einer Begrenzung des Zustandsraums ***Z,*'** zu prüfen, ob gilt: ZUS(t) ∈ ***Z,***', wobei im Fall ZUS(t) ∉ ***Z'*** der zweite Prozessor (106) einen Unterbrecher (114) veranlasst, die Datenverbindung (104) zwischen dem ersten Prozessor (103) und der Einheit (105) zu unterbrechen, und
- eine mit der Einheit (105) verbundene Steuereinheit (107) zur Steuerung des Roboters (102), die den Roboter (102) dann, wenn das zweite Stoppsignal Sig2 vorliegt, in einen vorgegebenen sicheren Zustand steuert/regelt.

2. System nach Anspruch 1,
bei dem der zweite Prozessor (106) zur Überwachung der Ausführung des ersten Algorithmus auf dem ersten Prozessor (103) eingerichtet ist, wobei der zweite Prozessor (106) bei Feststellung einer fehlerhaften Ausführung des ersten Algorithmus die Datenverbindung (104) unterbricht.

3. System nach Anspruch 1 oder 2,
bei dem der erste Prozessor (103) zur Überwachung der Ausführung des zweiten Algorithmus auf dem zweiten Prozessor (106) eingerichtet ist, wobei der erste Prozessor (103) bei Feststellung einer fehlerhaften Ausführung des zweiten Algorithmus ein erstes Stoppsignal Sig1 und/oder ein Warnsignal erzeugt.

4. System nach Anspruch 3,
bei dem eine Ausgabeeinheit vorhanden ist, die zur Ausgabe des Warnsignals als ein optisch und/oder akustisch wahrnehmbares Signal eingerichtet und ausgeführt ist.

5. System nach einem der Ansprüche 1 bis 4,
bei dem der Unterbrecher (114) ein vom zweiten Prozessor (106) gesteuerter Schalter ist.

6. System nach einem der Ansprüche 1 bis 5,
bei dem ein zweiter Chipsatz des zweiten Prozessors (106) über eine PCI-, PCI-X oder PCle-Verbindung mit einem ersten Chipsatz des ersten Prozessors (103) verbunden ist.

7. System nach einem der Ansprüche 1 bis 6,
bei dem der erste Prozessor (103) und der zweite Prozessor (106) unterschiedliche Prozessortypen sind.

8. System nach einem der Ansprüche 1 bis 7,
bei dem der erste Algorithmus und der zweite Algorithmus unterschiedliche Algorithmen sind.

9. Roboter mit einem System nach einem der Ansprüche 1 bis 8.

10. Verfahren zum Steuern eines Roboters (102), mit folgenden Schritten:
- durch eine Schnittstelle (101) Bereitstellen von Daten DAT(t), die einen von einem oder mehreren Sensoren (100) erfassten aktuellen Zustand ZUS(t) des Roboters (102) angeben,
- mittels eines auf einem ersten Prozessor (103) durchgeführten ersten Algorithmus auf Basis der Daten DAT(t) und eines vorgegebenen Zustandsraums ***Z*,** oder einer Begrenzung des Zustandsraums ***Z,*** der ausschließlich erlaubte Zustände des Roboters (102) angibt, Prüfen ob gilt: ZUS(t) ∈ ***Z*,** wobei im Fall: ZUS(t) ∉ ***Z*** ein erstes Stoppsignal Sig1 erzeugt wird,
- durch eine über eine Datenverbindung (104) mit dem ersten Prozessor (103) verbundene Einheit (105) Erzeugen eines zweiten Stoppsignals Sig2 dann, wenn von der Einheit (105) das erste Stoppsignal Sig1 empfangen wird oder wenn die Datenverbindung (104) unterbrochen ist,
- durch einen mit der Schnittstelle (101) und dem ersten Prozessor (103), oder nur mit dem ersten Prozessor (103) verbundenen zweiten Prozessor (106), mittels eines auf dem zweiten Prozessor (106) durchgeführten zweiten Algorithmus auf Basis der Daten DAT(t) und eines vorgegebenen Zustandsraums ***Z'*** oder einer Begrenzung des Zustandsraums ***Z*'** Prüfen, ob gilt: ZUS(t) ∈ ***Z*',** wobei im Fall ZUS(t) ∉ ***Z'*** die Datenverbindung (104) zwischen dem ersten Prozessor (103) und der Einheit (105) unterbrochen wird, und
- durch eine mit der Einheit (105) verbundene Steuereinheit (107) zur Steuerung des Roboters (102), Steuern/Regeln des Roboters (102) in einen vorgegebenen sicheren Zustand dann, wenn von der Steuereinheit (107) das zweite Stoppsignal Sig2 vorliegt.

## Claims

1. A system for controlling a robot (102), comprising:
- an interface (101), which provides data DAT(t) collected by one or a plurality of sensors (100), wherein the data DAT(t) indicate a current state ZUS(t) of the robot (102),
- a first processor (103) connected to the interface (101), which is set up, using a first algorithm based on the data DAT(t) and a specified state space ***Z*** or a limitation of the state space ***Z*** that indicates the exclusively allowed states of the robot (102), to check whether the following applies: ZUS(t) ε ***Z*,** wherein in the case of: ZUS(t) ∉ ***Z**,* a first stop signal Sig1 is generated,
- a unit (105) connected to the first processor (103) via a data connection (104) for generating a second stop signal Sig2, which generates the second stop signal when the first stop signal Sig1 is received from the unit (105) or when the unit (105) determines that the data connection (104) has been interrupted,
- a second processor (106) connected to the interface (101) and the first processor (103) or only to the first processor (103), which is set up, using a second algorithm based on the data DAT(t) and a specified state space ***Z*'** or a limitation of the state space ***Z'***, to check whether the following applies: ZUS(t) ε ***Z',*** wherein in the case of: ZUS(t) ∉ *Z*', the second processor (106) causes an interrupter (114) to interrupt the data connection (104) between the first processor (103) and the unit (105), and
- a control unit (107) connected to the unit (105) for controlling the robot (102), which then controls/regulates the robot (102) when the second stop signal Sig2 is present in a specified secure state.

2. The system according to Claim 1,
in which the second processor (106) is set up to monitor the execution of the first algorithm on the first processor (103), wherein the second processor (106) interrupts the data connection (104) upon detecting a faulty execution of the first algorithm.

3. The system according to Claim 1 or 2,
in which the first processor (103) is set up to monitor the execution of the second algorithm on the second processor (106), wherein the first processor (103) generates a first stop signal Sig1 and/or a warning signal upon detecting a faulty execution of the second algorithm.

4. The system according to Claim 3,
in which an output unit is present, which is set up and designed for outputting the warning signal as an optically and/or acoustically perceptible signal.

5. The system according to any one of Claims 1 to 4,
in which the interrupter (114) is a switch controlled by the second processor (106).

6. The system according to any one of Claims 1 to 5,
in which a second chipset of the second processor (106) is connected to a first chipset of the first processor (103) via a PCI, PCI-X or PCIe connection.

7. The system according to any one of Claims 1 to 6,
in which the first processor (103) and the second processor (106) are different processor types.

8. The system according to any one of Claims 1 to 7,
in which the first algorithm and the second algorithm are different algorithms.

9. A robot with a system according to any one of Claims 1 to 8.

10. A method for controlling a robot (102) comprising the following steps:
- via an interface (101), providing data DAT(t) that indicate a current state ZUS(t) of the robot (102) detected by one or a plurality of sensors (100),
- by means of a first algorithm executed on a first processor (103), based on the data DAT(t) and a specified state space ***Z***, or a limitation of the state space ***Z***, that indicates the exclusively allowed states of the robot (102), checking whether the following applies: ZUS(t) ε ***Z***, wherein in the case of: ZUS(t) ∉ ***Z***, a first stop signal Sig1 is generated,
- by means of a unit (105) connected to the first processor (103) via a data connection (104), then generating a second stop signal Sig2 when the first stop signal Sig1 is received from the unit (105) or when the data connection (104) is interrupted,
- by means of a second processor (106) connected to the interface (101) and the first processor (103), or only to the first processor (103), using a second algorithm executed on the second processor (106) based on the data DAT(t) and a specified state space ***Z'*** or a limitation of the state space ***Z'***, checking whether the following applies: ZUS(t) ε ***Z'***, wherein, in the case of ZUS(t) ∉ ***Z'***, the data connection (104) between the first processor (103) and the unit (105) is interrupted, and
- by means of control unit (107) connected to the unit (105) for controlling the robot (102), then controlling/regulating the robot (102) in a specified secure state when the second stop signal Sig2 is present from the control unit (107) .

## Revendications

1. Système pour commander un robot (102), comprenant :
- une interface (101), qui conditionne les données DAT(t) saisies par un ou plusieurs capteurs (100), sachant que les données DAT(t) indiquent un état actuel ZUS(t) du robot (102),
- un premier processeur (103) relié à l'interface (101), qui est agencé pour vérifier avec un premier algorithme sur la base des données DAT(t) et d'un espace d'état ***Z*** prédéfini ou d'une délimitation de l'espace d'état ***Z*** qui indique exclusivement des états autorisés du robot (102), si: ZUS(t) ε ***Z*** est valable, sachant qu'en cas de : ZUS(t) ∉ ***Z,*** un premier signal d'arrêt Sig1 est produit,
- une unité (105) reliée par une liaison de données (104) au premier processeur (103) pour produire un deuxième signal d'arrêt Sig2, qui produit ensuite le deuxième signal d'arrêt, lorsque le premier signal d'arrêt Sig1 est reçu par l'unité (105) ou lorsque l'unité (105) constate que la liaison de données (104) est interrompue,
- un deuxième processeur (106) relié à l'interface (101) et au premier processeur (103) ou uniquement au premier processeur (103), qui est agencé pour vérifier avec un deuxième algorithme sur la base des données DAT(t) et d'un espace d'état ***Z***' prédéfini ou d'une délimitation de l'espace d'état ***Z',*** si : ZUS(t) ε ***Z***' est valable, sachant qu'en cas de ZUS(t) ∉ ***Z',*** le deuxième processeur (106) incite un interrupteur (114) à interrompre la liaison de données (104) entre le premier processeur (103) et l'unité (105), et
- une unité de commande (107) reliée à l'unité (105) pour commander le robot (102), qui commande/règle le robot (102) ensuite dans un état sûr prédéfini, lorsque le deuxième signal d'arrêt Sig2 est présent.

2. Système selon la revendication 1,
pour lequel le deuxième processeur (106) est agencé pour surveiller l'exécution du premier algorithme sur le premier processeur (103), sachant que le deuxième processeur (106) interrompt la liaison de données (104) en cas de constatation d'une exécution défectueuse du premier algorithme.

3. Système selon la revendication 1 ou 2,
pour lequel le premier processeur (103) est agencé pour surveiller l'exécution du deuxième algorithme sur le deuxième processeur (106), sachant que le premier processeur (103) produit un premier signal d'arrêt Sig1 et/ou un signal d'avertissement en cas de constatation d'une exécution défectueuse du deuxième algorithme.

4. Système selon la revendication 3,
pour lequel une unité de sortie est présente, qui est agencée et exécutée pour émettre le signal d'avertissement sous la forme d'un signal perceptible optiquement et/ou acoustiquement.

5. Système selon l'une quelconque des revendications 1 à 4,
pour lequel l'interrupteur (114) est un contacteur piloté par le deuxième processeur (106).

6. Système selon l'une quelconque des revendications 1 à 5,
pour lequel un deuxième jeu de puces du deuxième processeur (106) est relié par une liaison PCI, PCI-X ou PCIe à un premier jeu de puces du premier processeur (103).

7. Système selon l'une quelconque des revendications 1 à 6,
pour lequel le premier processeur (103) et le deuxième processeur (106) sont des types de processeurs différents.

8. Système selon l'une quelconque des revendications 1 à 7,
pour lequel le premier algorithme et le deuxième algorithme sont des algorithmes différents.

9. Robot avec un système selon l'une quelconque des revendications 1 à 8.

10. Procédé pour commander un robot (102) avec les étapes suivantes :
- préparation par une interface (101) de données DAT(t) qui indiquent un état ZUS(t) actuel, du robot (102) saisi par un ou plusieurs capteurs (100),
- vérification, au moyen d'un premier algorithme exécuté sur un premier processeur (103) sur la base des données DAT(t) et d'un espace d'état ***Z*** prédéfini ou d'une délimitation de l'espace d'état ***Z,*** qui indique des états du robot (102) exclusivement autorisés, vérification si: ZUS(t) ε ***Z*** est valable, sachant qu'en cas de : ZUS(t) ∉ ***Z,*** un premier signal d'arrêt Sig1 est produit,
- production d'un deuxième signal d'arrêt Sig2 ensuite, par une unité (105) reliée par une liaison de données (104) au premier processeur (103), lorsque le premier signal d'arrêt Sig1 est reçu par l'unité (105) ou lorsque la liaison de données (104) est interrompue,
- vérification, par un deuxième processeur (106) relié à l'interface (101) et au premier processeur (103) ou uniquement au premier processeur (103), au moyen d'un deuxième algorithme exécuté sur le deuxième processeur (106) sur la base des données DAT(t) et d'un espace d'état ***Z*'** prédéfini ou d'une délimitation de l'espace d'état ***Z',*** si : ZUS(t) ε ***Z',*** est valable, sachant qu'en cas de ZUS(t) ∉ ***Z',*** la liaison de données (104) est interrompue entre le premier processeur (103) et l'unité (105), et
- commande/réglage du robot (102) ensuite dans un état sûr prédéfini par une unité de commande (107) reliée à l'unité (105) pour commander le robot (102), lorsque le deuxième signal d'arrêt Sig2 de l'unité de commande (107) est présent.
